# EUROPEAN PATENT SPECIFICATION

(11) **EP 3 110 161 B1**
(45) Date of publication and mention of the grant of the patent: **09.10.2019**
(21) Application number: 15173298.9
(22) Date of filing: 23.06.2015
(51) Int. Cl.: H04N 21/414, H04N 21/4223, H04N 21/454, H04N 21/4545, H04N 21/835, H04N 21/485, H04N 1/00

(54) **METHOD, APPARATUS AND COMPUTER PROGRAM PRODUCT FOR CONTROLLING ACCESS TO CONCURRENTLY CAPTURED IMAGES**
VERFAHREN, VORRICHTUNG UND COMPUTERPROGRAMM FÜR ZUGRIFFSCONTROLLE VON GLEICHZEITIG AUFGENOMMENEN BILDERN
PROCÉDÉ, DISPOSITIF ET PROGRAMME D'ORDINATEUR POUR CONTRÔLER L'ACCÈS AUX IMAGES CAPTURÉES EN MÊME TEMPS

(43) Date of publication of application: 28.12.2016
(73) Proprietor: Nokia Technologies Oy, 02610 Espoo (FI)
(72) Inventor: SEKO, Shigeyuki, Campbell, CA California 95008 (US)
(74) Representative: Potter Clarkson

(56) References cited:
- EP-A1- 2 426 969
- US-A1- 2011 296 308
- US-A1- 2012 120 186
- US-A1- 2013 128 992
- DUFAUX F ET AL: "JPSEC for Secure Imaging in JPEG 2000", PROCEEDINGS OF SPIE, S P I E - INTERNATIONAL SOCIETY FOR OPTICAL ENGINEERING, US, vol. 5558, 1 November 2004 (2004-11-01), pages 319-330, XP002402944, ISSN: 0277-786X, DOI: 10.1117/12.564837 ISBN: 978-1-62841-577-3
- D. P. Howley: "How to Use Dual Camera Mode for the Samsung Galaxy S4", www.laptopmag.com, 24 April 2013 (2013-04-24), XP055203698, Retrieved from the Internet: URL:http://blog.laptopmag.com/how-to-use-d ual-camera-mode-for-the-samsung-galaxy-s4 [retrieved on 2015-07-21]

## Description

### TECHNOLOGICAL FIELD

An example embodiment relates generally to a method, apparatus and computer program product for controlling access to one or more images and, more particularly, to a method, apparatus and computer program product for controlling access to at least one of multiple images that are captured concurrently.

### BACKGROUND

Some mobile terminals, such as mobile telephones, smart phones, tablet computers and the like, include multiple cameras with each camera configured to capture an image of a scene in a different direction. For example, a mobile terminal may include a main camera, such as a forward-facing camera, and a secondary camera, such as a rearward-facing camera. The main camera is typically configured to capture the scene in front or forward of the user. The secondary camera secondary camera is typically configured to capture the scene in a rearward direction pointing toward the user. The image captured by the secondary camera frequently includes the user who is operating the mobile terminal.

Having multiple cameras, such as the main and secondary cameras, is oftentimes desirable. However, the user may need to spend additional time and effort to manage images captured by the main and secondary cameras.

US 2012/0120186 discloses apparatus and methods related to image taking and processing. For example, some embodiments may contain a front facing camera and a back facing camera and can be used for including the image-taker as part of the images taken by the image-taker, for verifying authorship of the images, for creating documentary style still or moving images combining the images of the person creating the documentary and the images of the subject or the scene being documented, and for creating a wide field of views of still and moving images.

US 2011/0296308 discloses a mobile terminal including a display unit configured to display at least one display data, a communication unit configured to exchange the at least one display data externally, and a controller configured to establish a data path to an external display device via the communication unit, to control the at least one display data displayed on the display unit to be transmitted to and to be displayed on the external display device via the data path, and to determine whether to transmit the at least one display data according to a privacy property, wherein the privacy property indicates whether a sharing restriction is set for each of the at least one display data.

EP 2426969 discloses an information security method for a mobile terminal is presented. The method includes setting security information for a content associated with a first user, uploading the content to a Social Network Service (SNS) site, and uploading the security information to the SNS site to permit the SNS site to register the security information in order to display the content according to the security information when the content is accessed by a second user via the SNS site.

*"*JPSECfor secure imaging in JPEG 2000" by Dufaux, F, et al, Proc. SPIE 5558, Applications of Digital Image Processing XXVII, 319, discloses a review of the ongoing JPSEC standardization activity. Its goal is to provide a standardization framework for secure imaging.

### BRIEF SUMMARY

The invention and the particular embodiments claimed are defined by the attached claim set. The following summary comprises illustrative examples related to the claimed subject-matter.

A method, apparatus and computer program product are provided in accordance with an example embodiment in order to facilitate the concurrent capture of first and second images by a mobile terminal. In this regard, the method, apparatus and computer program product permit a security level to be associated with at least one of the first or second images so as to selectively control access thereto. As such, a user can permit both the first and second images to be concurrently captured and then viewed or shared with others without concern that the images will embarrass or otherwise place the user in an unflattering light since the security level associated with at least one of the first and second images appropriately controls access in a fashion with which the user is comfortable.

Thus, the user is able to concurrently capture first and second images more quickly without having to modify the settings of the mobile terminal and to share images without having to review each image individually in advance in order to determine the acceptability of the image as a result of the access controls imposed by the security level associated with the images.

In an example embodiment, a method is provided that includes receiving an indication that first and second images have been captured concurrently by a mobile terminal. The first image is captured of a scene in a first direction from the mobile terminal. The second image is captured of a scene in a second direction from the mobile terminal, different from the first direction. The method of this example embodiment also includes associating a security level with at least one of the first and second images to control access thereto.

The method of an example embodiment associates the security level with the second image restricting access to the second image without correspondingly restricting access to the first image. The method of an example embodiment associates different security levels with the first and second images so as to differently control access thereto. The method of an example embodiment receives the indication that first and second images have been captured concurrently by receiving the first and second images from front and rear image capturing devices of the mobile terminal, respectively. The method of this example embodiment also includes providing for storage of the first and second images with the security level associated with the at least one of the first and second images.

The method of an example embodiment associates the security level with at least one of the first and second images by associating one of the plurality of security levels with at least one of the first or second images. The plurality of security levels define different degrees of obfuscation of the respective image. In an example embodiment, the plurality of security levels include a lowest security level that provides no obfuscation of the respective image, a highest security level that provides complete obfuscation of the respective image and one or more intermediate security levels that provide partial obfuscation of the image. For example, an intermediate security level may provide for obfuscation of at least a face within the respective image.

In another example embodiment, the apparatus is provided that includes means for receiving an indication that first and second images have been captured concurrently by a mobile terminal. The first image is captured of a scene in a first direction from the mobile terminal. The second image is captured of a scene in a second direction from the mobile terminal, different from the first direction. The apparatus also includes means for associating a security level with at least one of the first and second images so as to control access thereto.

The means for associating the security level with at least one of the first and second images includes, in an example embodiment, means for associating the security level with the second image restricting access to the second image without correspondingly restricting access to the first image. The means for associating the security level with at least one of the first and second image includes, in an example embodiment, means for associating different security levels with the first and second images so as to differently control access thereto. In an example embodiment, the means for receiving the indication that first and second images have been captured include means for receiving the first and second images from front and rear image capturing devices of the mobile terminal, respectively. The apparatus of this example embodiment also includes means for providing for storage of the first and second images with the security level associated with at least one of the first and second images.

The means for associating the security level with at least one of the first or second images includes, in an example embodiment, means for associating one of the plurality of security levels with at least one of the first or second images. In this example embodiment, the plurality of security levels define different degrees of obfuscation of the respective image. By way of example, the plurality of security levels include a lowest security level that provides no obfuscation of the respective image, a highest security level that provides complete obfuscation of the respective image and one or more intermediate security levels that provide partial obfuscation of the respective image. For example, an intermediate security level may provide for obfuscation of at least at face within a respective image.

In a further example embodiment, a computer program product is provided that includes at least one non-transitory computer-readable medium having program code portions stored therein with the program code portions configured, upon execution to receive an indication that first and second images have been captured concurrently by a mobile terminal. The first image is captured of a scene in a first direction from the mobile terminal. The second image is captured of a scene in a second direction from the mobile terminal, different from the first direction. The program code portions are also configured to associate a security level with at least one of the first or second images to control access thereto.

The program code portions for associating the security level with at least one of the first or second images include, in an example embodiment, program code portions configured to associate the security level with the second image restricting access to the second image without correspondingly restricting access to the first image. The program code portions configured to associate the security level with at least one of the first or second images include, in accordance with an example embodiment, program code portions configured to associate different security levels with the first and second images so as to differently control access thereto. The program code portions configured to receive the indication that first and second images have been captured include, in accordance with an example embodiment, program code portions configured to receive the first and second images from front and rear image capturing devices of the mobile terminal, respectively. The program code portions of this example embodiment also include program code portions configured to provide for storage of the first and second images with the security level associated with the at least one of the first and second images.

The program code portions configured to associate the security level with at least one of the first or second images include, in accordance with an example embodiment, program code portions configured to associate one of a plurality of security levels with at least one of the first or second images. The plurality of security levels define different degrees of obfuscation of the respective image. By way of example, the plurality of security levels include a lowest security level that provides no obfuscation of the respective image, a highest security level that provides complete obfuscation of the respective image and one or more intermediate security levels that provide partial obfuscation of the respective image. For example, an intermediate security level provides for obfuscation of at least a face within the respective image.

### BRIEF DESCRIPTION OF THE DRAWINGS

Having thus describing the embodiments of the present invention in general terms, reference will now be made to the accompanying drawings, which are necessarily drawn to scale, and wherein:
Figure 1 is a perspective view of a mobile terminal including first and second image capturing devices configured to concurrently capture images of scenes in different directions;
Figure 2 is block diagram of an apparatus that may be configured in accordance with some example embodiments of the present invention;
Figure 3 is a flowchart illustrating operations performed, such as by the configured apparatus of Figure 2, in accordance with an example embodiment of the present invention;
Figure 4 illustrates the result of a plurality of different security levels being separately applied to the images concurrently captured by first and second image capturing devices of a mobile terminal in accordance to some example embodiments of the present invention;
Figures 5A - 5D illustrate different example manners in which the first and second images that are concurrently captured may be displayed in accordance with some example embodiments of the present invention; and
Figure 6 illustrates another example manner in which first and second images that are concurrently captured may be displayed in accordance with an example embodiment of the present invention.

### DETAILED DESCRIPTION

Some example embodiments of the present invention will now be described hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "non-transitory computer-readable medium," a "computer-readable storage medium," and the like each refers to a physical storage medium (e.g., volatile or non-volatile memory device), may be differentiated from a "computer-readable transmission medium," which refers to an electromagnetic signal.

Mobile terminals may be implemented to include more than one camera (an image capturing device capable of capturing still images, videos, etc.). For example, mobile terminals may include one or more cameras referred to as main cameras and one or more secondary cameras. For example, the cameras may be configured to point to different directions on a conceptual two-dimensional x-y plane (e.g., pointing to different angles from a point of origin on the x-y plane). In some implementations, cameras may also be pointing above and/or below the x-y plane (e.g., cameras may be pointing to any directions from a point of origin of a three-dimensional x-y-z space).

The mobile terminals may allow concurrently capturing images with the two or more of the included cameras, such as the main cameras and secondary cameras. Mobile terminals may be implemented to allow users to indicate, e.g., via settings and/or other controls (virtual and/or physical), whether the users want to capture images using any combination of the included cameras, such as just the main camera, just a secondary camera, both the main and a secondary cameras concurrently, or another combination of cameras if there are additional cameras.

In this mode of operation, two or more images may be concurrently captured of scenes by two or more cameras. For example, a main (there may be more than one) and a secondary cameras may be concurrently captured of scenes in both the forward and rearward directions relative to the mobile terminal. In a typical example in which a user holds the mobile terminal such that the main camera faces the scene of interest in the forward direction relative to the mobile terminal, the main camera captures the image of the scene of interest, while the secondary camera captures an image in the rearward direction that may include the user who is holding the mobile terminal and the surroundings about the user.

Some users of mobile terminals may enjoy concurrently capturing images (e.g., with both the main and secondary cameras). Some of these users may not wish to share the images or permit the images to be viewed in the same manner. For example, a user who is capturing an image with the main camera of a mobile terminal may not want an image to be concurrently captured by the secondary camera in an instance in which the user is in a compromising, embarrassing or otherwise undesired state. In other words, the user may be capturing an image with the main camera, but may not consider their appearance to be suitable or otherwise sufficiently presentable to be memorialized in an image captured by the secondary camera.

Thus, in an instance in which a mobile terminal is primarily configured to concurrently capture images with both the main and secondary cameras, a user must make a determination prior to capturing an image with the main camera as to whether the settings of the mobile terminal should be modified to disable the secondary camera, such as in an instance in which the user considers their appearance to be unsuitable. In this scenario, a user must make the determination as to whether the secondary camera should be disabled on an image-by-image basis. If the user determines that the secondary camera should not concurrently capture an image, the user must expend additional time modifying the settings of the mobile terminal, thereby delay the capture of the image by the main camera. Since some scenes are fleeting or otherwise transient, the delay incurred to modify the settings of the mobile terminal so as to prevent the secondary camera from concurrently capturing an image may cause the user to miss the opportunity to capture the image of the desired scene.

Alternatively, in an instance in which the mobile terminal is primarily configured to only capture images with the main camera, a user who determines that it would be desirable to capture images concurrently with both the main and secondary cameras will be similarly required to expend additional time to modify the settings of the mobile terminal. In either instance, the modification of the settings of the mobile terminal prior to the capture of an image undesirably delays the capture of the image and requires the user to expend additional effort to selectively enable or disable the secondary camera.

If images have previously been concurrently captured by the main and secondary cameras, a user may be forced to expend additional time when viewing or sharing the images to ensure that the images captured by the secondary camera are suitable to be viewed or shared with others. This additional effort that must be expended by the user may be exacerbated in instances in which the images are viewed or shared a long time, such as months or years, following the capture of the images since the user will likely no longer specifically recall the content of the images captured by the secondary camera and further since the user's tastes or degree of modesty may have changed with age.

As defined herein, an "image" refers to any image or video image (e.g., an image taken in any segment of the spectrum of light, such as visible light, infrared, ultraviolet (UV), etc.). Example images include, but are not limited to, day-light images, low-light images, night-vision images, thermal images, UV images, etc. A video image is a still image or frame in a video. For example, a video may be created with any number of frames per second (fps), such as 60, 48, 30, 25, 24, 12, etc. One second of 24 fps video includes 24 frames or images.

As defined herein, "concurrently captured images" refer to images captured by two or more image capturing devices at about the same time. For example, the shutters of the image capturing devices may be caused to open at about the same time or caused to close at about the same time. In some implementations, a shutter may be caused to open at about the same time when another shutter is being caused to close.

A method, apparatus and computer program product are provided in accordance with an example embodiment in order to associate a security level with at least one of two or more images that are captured concurrently, such as by first and second image capturing devices of a mobile terminal. By associating a security level with at least one of the concurrently captured images, access thereto may be controllably restricted. Consequently, a user may capture images concurrently with the first and second image capturing devices of a mobile terminal with less concern that subsequent viewing or sharing of the images may cast the user in a less flattering light than desired since the security level associated therewith will restrict access thereto. In some implementations, the user may be provided with one or more tools (e.g., user interfaces) to change, add, or remove a security level that is associated with some or each of the captured images.

By relying upon the security level associated with at least one of the concurrently captured images and the access restrictions associated therewith, the images may be concurrently captured by both the first and second image capturing devices of a mobile terminal more quickly and with less effort by the user. In this regard, the user need not consider modification of the settings of the mobile terminal in advance of the capture of the images. In addition, the resulting images may be viewed or shared with less, if any, advance review by the user since the security level associated with at least one of the concurrently captured images will restrict access and reduce or eliminate instances in which images of a user in an unauthorized, embarrassing, or otherwise undesirable state are inadvertently viewed or shared.

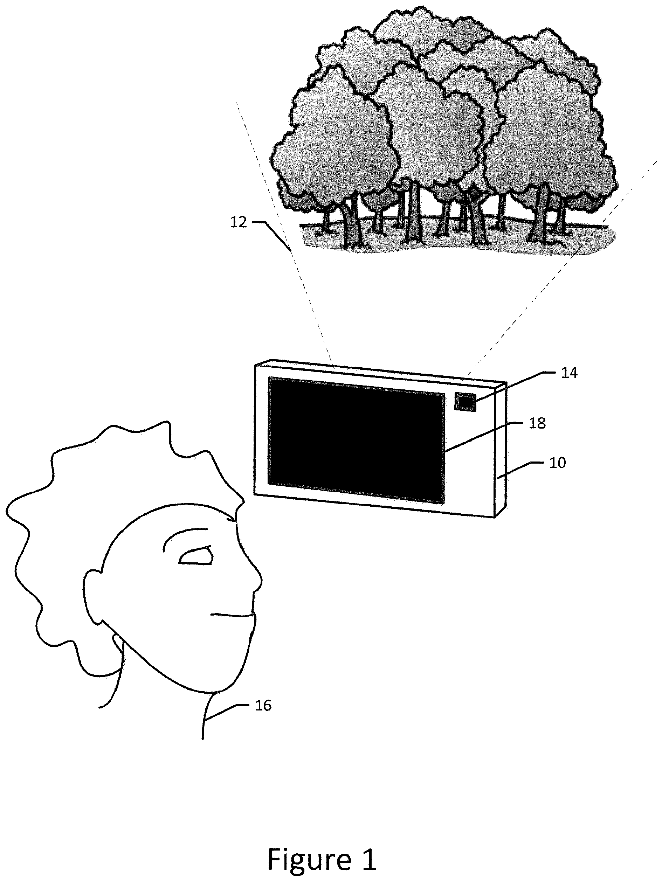

By way of example, Figure 1 depicts a mobile terminal 10 that is configured to concurrently capture first and second images. In this regard, the mobile terminal includes a first image capturing device, such as a main camera (not shown), having a field of view 12 that extends in a first direction, such as a forward direction, relative to the mobile terminal. Thus, the first image capturing device is configured to capture an image or video of the scene in the first direction, such as a scene of the tree and anything near the tree in the example of Figure 1. The main camera generally opens through a first surface or side of the mobile terminal, such as the surface of side of the mobile terminal that is opposite the display 14. As such, the first direction in which the main camera captures an image typically extends outward from the mobile terminal in the same direction that the user is facing in an instance in which the user is holding the mobile terminal while the image is captured. In some implementation, display 14 is a touch screen display with which user 16 interacts. It should be understood that the subject matter described herein can be implemented using mobile devices (e.g., mobile terminals), non-mobile devices (e.g., any device with image capturing capability), or both mobile and non-mobile devices. Mobile terminal 10 is only an example of the possible devices that can implement the subject matter describe herein.

In addition to the first image capturing device, such as the main camera, the mobile terminal 10 also includes a second image capturing device 18, such as a secondary camera, for capturing a second image of a scene in a second direction from the mobile terminal, different from the first direction, such as by extending generally in the opposite direction. In an example embodiment depicted in Figure 1, the secondary camera opens through a second surface or side of the mobile terminal, opposite the surface or side through which the main camera opens. In this regard, the mobile terminal of an example embodiment includes a second image capturing device that opens through the same surface of the mobile terminal that carries the display 14, which may be a touch screen with which the user 16 interacts. As such, the second image captured by the second image capturing device may be of a scene in the second direction, such as a rearward direction, opposite the forward direction, relative to the mobile terminal. In the example of Figure 1, the second image captured by the second image capturing device, such as the secondary camera, of the mobile terminal includes an image of the user who is holding and operating the mobile terminal as well as some of the surroundings of the user.

The first and second images captured by the mobile terminal 10 may each be still images. Alternatively, one or both of the first and second images may be video images comprised of a plurality of sequential frames. The first and second images may be of the same type, such as with the first and second images both being still images or with the first and second images both being video images. Alternatively, the first and second images may be of different types, with the first image being a video image and the second image being a still image or, conversely, with the first image being a still image and the second image being a video image. The first and second images captured concurrently by the mobile terminal may, but need not necessarily, include associated audio (e.g., captured by one or more microphone of or associated with mobile terminal 10).

The mobile terminal 10 may be configured to concurrently capture the first and second images with the first and second image capturing devices, such as the main and secondary cameras, such as in response to an input, e.g., actuation of a hard or soft key or actuation of a virtual button defined by a touch screen display 14, by the user 16. In some instances, the concurrent capture of the first and second images is desirable since the user and others may desire not only to view the scene captured by the first image, but also the second image of the user and his or her surroundings at the same point in time. The second image may be interesting, for example, when reviewing the images, potentially years later, and the user 16 or others are interested in the appearance of the user, the clothing or hairstyle of the user or other features of the user and his or her surroundings.

However, the user 16 may be concerned with the capture of second images by the second image capturing device 18, such as the secondary camera, that depict the user in an embarrassing or otherwise undesirable light that the user does not wish to freely share or allow others to view. For example, the user may not have fully fixed their hair, may not have applied their makeup, may be in a partial state of undress, or may be in a location or other setting that the user does not wish others to view, either now or at some point in the future when the images are viewed or shared. Thus, methods, apparatuses and computer program products described herein of some example embodiments associate at least one security level with at least one of the concurrently captured images, such as the second image captured by the second image capturing device of the mobile terminal, in order to control or restrict access thereto.

The mobile terminal 10 including the first and second image capturing devices may be configured in any of a wide variety of manners. For example, the mobile terminal may be embodied as a personal digital assistant (PDA), mobile telephone, smart phone, companion device, for example, a smart watch, pager, mobile television, gaming device, laptop computer, camera, tablet computer, touch surface, video recorder, audio/video player, radio, electronic book or any combination of the aforementioned, and other types of voice and text communications systems. In some implementations, one or more image capturing devices may be associated with mobile terminal 10 (e.g., image capturing devices that are external or separated from mobile terminal 10 but available for use or access by mobile terminal 10).

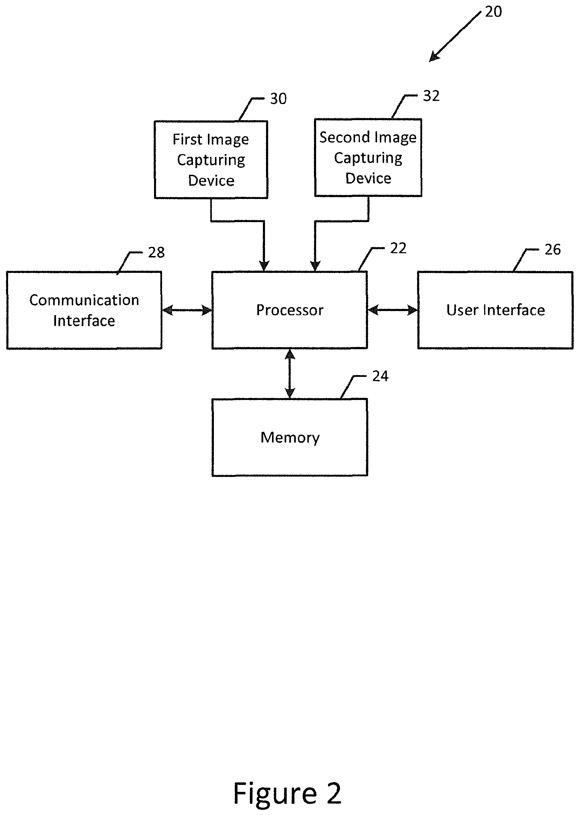

The mobile terminal 10 may include or otherwise be associated with an apparatus (e.g., apparatus 20, Figure 2) configured to associate a security level with at least one of the concurrently captured images in accordance with an example embodiment of the present invention. In one example embodiment, the mobile terminal may include the apparatus such that the mobile terminal not only concurrently captures the first and second images, but also associates the security level with at least one of the first and second images. The first and second images and the security level associated therewith may then be stored, such as by the mobile terminal and/or by an external memory device, such as the memory device of a personal computer, a server, cloud storage or the like.

Alternatively, an apparatus (e.g., the apparatus 20, Figure 2) that is configured to associate a security level with at least one of the concurrently captured images may be separate and distinct from, but in communication with the mobile terminal 20, either directly or indirectly. In this example embodiment, the mobile terminal may be associated with and in communication with another computing device that embodies the apparatus. The first and second images may be captured by the mobile terminal and the first and second images or an indication of the first and second images may then be provided to the computing device including the apparatus with which the mobile terminal is in communication. The apparatus may then associate the security level with at least one of the first or second images. As before, the first and second images and the security level associated therewith may then be stored, such as by the mobile terminal and/or by an external memory device, such as the memory device of a personal computer, a server, cloud storage or the like.

In this example embodiment, the computing device that embodies the apparatus 20 may be another mobile terminal, such as a PDA, mobile telephone, smart phone, companion device, for example, a smart watch, pager, mobile television, gaming device, laptop computer, camera, tablet computer, touch surface, video recorder, audio/video player, radio, electronic book or any combination of the aforementioned, and other types of voice and text communications systems. Alternatively, the computing device that embodies the apparatus may be a fixed computing device, such as a personal computer, a computer workstation, a kiosk or the like, or any of various other types of computing devices. The mobile terminal 10 and/or apparatus 20 may be part of or used on a movable platform, such as a bicycle, motorcycle, vehicle, boat, ship, airplane, etc.

Regardless of the manner in which the mobile terminal 10 or computing device that embodies or is otherwise associated with the apparatus 20 is embodied, the apparatus of an example embodiment is depicted in Figure 2. The apparatus may include, be associated with or otherwise in communication with at least one processor 22, a memory device 24 and user interface 26. In some embodiments, the processor (and/or coprocessors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As noted above, the apparatus 20 may be embodied by the mobile terminal 10 or by another computing device. However, in some embodiments, the apparatus may be embodied as a chip or chip set. In other words, the apparatus may comprise one or more physical packages (for example, chips) including materials, components and/or wires on a structural assembly (for example, a circuit board). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 22 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 22 may be configured to execute instructions stored in the memory device 24 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 20 of an example embodiment may also include or otherwise be in communication with user interface 26, e.g., user interface 14 of Figure 1. The user interface may include one or more physical buttons, a touch screen display, a keyboard, a mouse, a joystick, a microphone, and/or other input/output mechanisms. In some embodiments, the user interface, such as a display, speakers, or the like, may also be configured to provide output to the user. In this example embodiment, the processor 22 may comprise user interface circuitry configured to control at least some functions of one or more input/output mechanisms. The processor and/or user interface circuitry comprising the processor may be configured to control one or more functions of one or more input/output mechanisms through computer program instructions (for example, software and/or firmware) stored on a memory accessible to the processor (for example, memory device 24, and/or the like).

The apparatus 20 of an example embodiment may also optionally include a communication interface 28 that may be any means such as a device or circuitry embodied in either hardware or a combination of hardware and software that is configured to receive and/or transmit data from/to other electronic devices in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication.

Regardless of whether the mobile terminal 10 includes or is in association with the apparatus 20, the mobile terminal includes a plurality of image capturing devices. Although described hereinafter as including first and second image capturing devices 30, 32, such as a main camera and a secondary camera, the mobile terminal may include three or more image capturing devices in other embodiments. Regardless of the number of image capturing devices, the image capturing devices may each include any means, such as a camera, a video recorder, an image sensor or the like, for obtaining an image, such as a still image, video images or the like, for storage, display or transmission. For example, the image capturing devices may each include a digital camera including an image sensor capable of obtaining an image. As such, the image capturing devices may include all hardware, such as a lens, an image sensor and/or other optical device(s), and software necessary for capturing an image. Alternatively, the image capturing devices may include only the hardware needed to view an image, while the memory 24 stores instructions for execution by the processor 22 in the form of software necessary to capture, store and process an image. In an example embodiment, the image capturing devices may further include a processing element such as a co-processor which assists the processor in processing image data and an encoder and/or decoder for compressing and/or decompressing image data. The encoder and/or decoder may encode and/or decode according to a predefined format, such as a JPEG standard format.

In embodiments in which the mobile terminal 10 includes the apparatus 20 of Figure 2, the apparatus may also include or otherwise be in communication with the plurality of image capturing devices, such as the first and second image capturing devices 30, 32, as shown in Figure 2. However, in other embodiments in which the apparatus is embodied by a computing device different from the mobile terminal, the apparatus will not include the plurality of image capturing devices as the image capturing devices will, instead, be embodied by the mobile terminal. However, the apparatus will still receive an indication of the first and second images captured by the first and second image capturing devices, respectively, as described below.

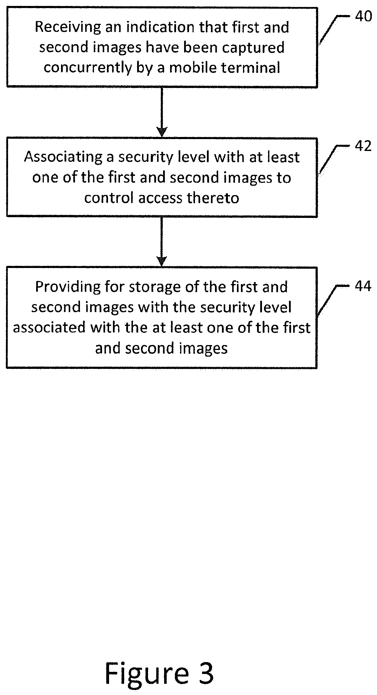

Referring now to Figure 3, the operations performed, such as by the mobile terminal 10 of Figure 1 or apparatus 20 of Figure 2, are depicted. As shown in block 40, the apparatus includes means, such as the processor 22, the communication interface 28 or the like, for receiving an indication that the plurality of images, such as first and second images, have been captured concurrently by the mobile terminal 10. As described above in conjunction with the example of Figure 1, the first image may be captured of a scene in a first direction from the mobile terminal, such as a forward direction, and the second image may be captured of a scene in a second direction from the mobile terminal, different from the first direction, such as opposite the first direction. In this regard, the first image may be captured of the scene that the user 16 who is holding and operating the mobile terminal is viewing, while the second image may be of the scene in a rearward direction from the mobile terminal. The second image may therefore include the user and his or her surroundings.

In embodiments in which the mobile terminal 10 includes the apparatus 20, the receipt of the indication that first and second images have been captured by the mobile terminal may include the receipt of the first and second images themselves from first and second image capturing devices 30, 32 of apparatus 20, respectively. In this example embodiment, the apparatus may also include means, such as the processor 22, the memory 24 or the like, for providing for processing and/or storage of the first and second images, such as within the memory of the mobile terminal and/or within an external memory device, such as within the memory device of another computing device, such as a personal computer, a server, a cloud storage or the like. Alternatively, in an instance in which another device (e.g., a computing device) distinct from the mobile terminal embodies the apparatus, the indication that first and second images have been captured by the mobile terminal that is received by the apparatus, such as the processor, may be the receipt of the first and second images by the apparatus. However, the apparatus of this alternative embodiment may not necessarily receive the first and second images themselves, but may receive, instead, an indication, such as a notification signal from the mobile terminal, that first and second images have been captured by the mobile terminal. This indication may identify the first and second images, such as by respective identifiers, time of capture or other identifying indicia.

As shown in block 42 of Figure 3, the mobile terminal 10 or the apparatus 20 also includes means, such as the processor 22 or the like, for associating a security level with at least one of the first and second images to control (e.g., restrict) access thereto. For example, the security level associated with a respective image may prevent viewing of the image in its original form without proper authentication, such as entry of appropriate security credentials, such as user name and/or password or the like. In an embodiment in which a security level is associated with each of the first and second images, the same or different passwords may be utilized to obtain access to the first and second images. As such, subsequent access to the image(s) with which the security level is associated is restricted, even in instances in which the first and second images are shared or efforts are otherwise made to view the first and second images. The apparatus, such as the processor, may be configured to automatically apply the security level to at least one of the concurrently captured images. Alternatively, the apparatus, such as the processor, may cause the user to be prompted upon receipt of an indication of the concurrent capture of the first and second images as to whether a security level should be associated therewith and the apparatus, such as the processor, will thereafter associate a security level with at least one of the first and second images in an instance in which an indication is provided, such as by the user, that the security level should be associated therewith. In some implementations, one or more security levels may include cryptographic authentication, such as using a symmetric-key algorithm (e.g., using a secret key) or an asymmetric algorithm (e.g., using public/private keys).

As shown in block 44, the mobile terminal 10 or the apparatus 20 of an example embodiment also includes means, such as the processor 22, the memory device 24 or the like, for providing for storage, not only of the first and second images as noted above, but also of an indication of a security level associated with at least one of the first and second images. The indication of the security level may be stored in such a manner as to be linked to the respective image, such as by being stored with or otherwise associated with the respective image in any of various manners. For example, the security level may be included in metadata associated with the respective image and stored therewith. Alternatively, the security level and an indication of the respective image with which the security level is associated, such as the identifier of the image with which the security level is associated, may be stored separately from the respective image. However, the security level and the indication of the associated image may be stored in a manner that is subsequently accessible, such as in an instance in which the respective image is to be viewed or shared, such that the access restrictions defined by the respective security level may be applied prior to such viewing or sharing of the respective image. In some implementations, one or more security levels may include encryption of at least one of the first and second images.

Although security levels may be associated with both of the first and second images that are concurrently captured by the mobile terminal 10, the apparatus 20, such as the processor 22, of an example embodiment may be implemented or configured by user 16 to associate a security level with only the second image, that is, the image captured by the second image capturing device 32 of the user 16 and his or her surroundings, without correspondingly restricting access to the first image captured by the first image capturing device 30, such as of the scene in advance or in the forward direction relative to the mobile terminal. As such, the apparatus, such as the processor, is configured to associate different security levels with the first and second images in order to differently control/restrict access thereto.

As described above, Figure 3 is a flowchart of an apparatus 20, method and computer program product according to example embodiments of the invention. It will be understood that each block of the flowchart, and combinations of blocks in the flowchart, may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 24 of an apparatus employing an embodiment of the present invention and executed by a processor 22 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, some of which have been described above. Modifications, additions, or amplifications to the operations above may be performed in any order and in any combination.

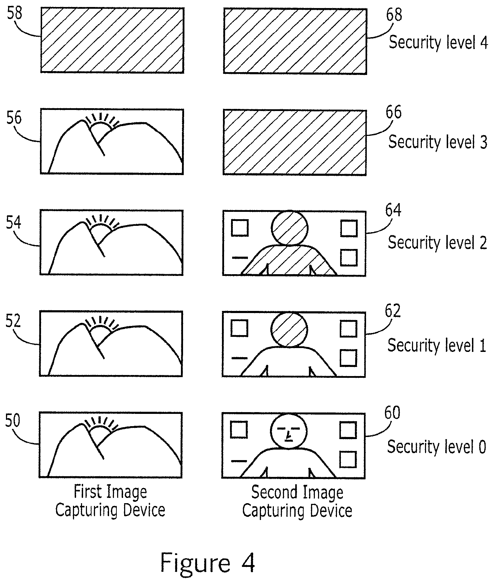

Although the apparatus 20, such as the processor 22, may be configured to associate only a single security level with the first and/or second images, the apparatus, such as the processor, of an example embodiment is configured to associate one of a plurality of security levels, such as a plurality of predefined security levels, with at least one of the first or second images. In this regard, the plurality of security levels define different degrees to which access is controlled or restricted to the respective image. For example, the plurality of security levels may define different degrees of obfuscation of the images. By way of example, Figure 4 depicts an example embodiment in which five different security levels may be associated with the first or second images with each security level defining a different degree of obfuscation of the respective image.

The plurality of security levels include a lowest security level, designated security level 0, that provides no obfuscation of the respective image. In the example of Figure 4, security level 0 is applied to the first and second images captured by the first and second image capturing devices 30, 32, respectively, to permit the first and second images 50, 60 to be viewed in the same manner in which the images were captured and stored. Alternatively, the highest security level, designated as security level 4 in the example embodiment of Figure 4, provides complete obfuscation of the respective image. With respect to the example of Figure 4, security level 4, when applied to the first and second images, completely obfuscates both the first and second images 58, 68 when the first and second images are thereafter viewed.

Still further, the plurality of security levels may include one or more intermediate security levels that provide partial obfuscation of the respective image. For example, an intermediate security level may provide for obfuscation of at least a face within the respective image. With reference to the example embodiment of Figure 4, security levels 1, 2 and 3 are intermediate security levels with progressively increasing amounts of obfuscation of the respective second image. Although all or part of the first image may also be obfuscated upon application of an intermediate security level, the intermediate security levels designated security levels 1, 2 and 3 in the example embodiment of Figure 4 do not obfuscate the first image such that the first image is presented in the same manner in which it was originally captured or touched up with image editing tool and stored as indicated by first images 52, 54 and 56. However, the intermediate security levels represented by security levels 1, 2 and 3 provide increasing amounts of obfuscation of the second image with only the faces of any or selected people within the second image being obfuscated in security level 1 as shown by second image 62, with the entirety of any or selected people, including both the body and face of the people, within the second image, being obfuscated in conjunction with security level 2 as shown by second image 64, and the entirety of the second image being obfuscated in conjunction with security level 3 as shown by second image 66. The selected people may be identified by using any facial recognition method.

As noted above and regardless of the security level that is associated with the first or second images, the original image (which may have been altered or enhanced using an image editing tool), such as the original second image, that is captured and stored, may be viewed in its entirety in an unobfuscated manner upon entry of appropriate security credentials, such as user name or password or the like, or using the correct cryptographic key. As such, the obfuscated images depicted, for example, in Figure 4 are not representative of the images that are stored as the images that are stored include the full detail and are unobfuscated in the manner in which the images were originally captured or edited. Instead, the images depicted in Figure 4 are those that would be viewed, such as upon the user interface 26, in the absence of the entry of appropriate security credentials associated with the respective security level for the image.

As shown in Figure 4, the association of a security level with the first and/or second images may include the association of the same security level with each of the first and second images. However, the apparatus 20, such as the processor 22, of an example embodiment may differently restrict access to the first and second images, such as by differently obfuscating an image in response to the association of the same security level therewith depending upon whether the respective image was captured by the first image capturing device 30 or the second image capturing device 32. Alternatively, the apparatus, such as the processor, may be configured to associate a security level with one of the images, such as the second image, but not the other of the images, such as the first image, such that the image, e.g., the first image, that does not have a security level associated therewith may be viewed or shared without any access restrictions.

In yet another example embodiment, different access restrictions may be applied to the first and second concurrently captured images. For example, a security level may be associated with one of the first and second images, such as the second image. In response, a different security level, such a security level that provides less obfuscation, may be applied to the other concurrently captured image, such as the first image. In an example embodiment having a plurality of predefined security levels, the association of a respective security level with the second image may cause a lower security level (which provides less obfuscation) to be applied to the concurrently captured first image. The lower security level may be lower by a predefined number of security levels, such as one security level, two security levels, etc. In an example in which the predefined number is two security levels, the association of security level 4 to the second image may automatically cause security level 2 (that is, a security level that is two levels less than that associated with the second image) to be associated with the first image.

The security level associated with an image may restrict access to the image uniformly regardless of the identity of the person attempting to access the image. Alternatively, the security level may be defined in such a manner as to be dependent upon the person attempting to access the image. For example, a social network, mobile terminal 10 and/or the computing device that embodies the apparatus 20 may identify several types of contact, such as friends, family, co-workers and others. In an instance in which the person attempting to access the image is determined to be a friend or family (e.g., a group of users with a certain degree of closeness to the owner or controller of the images being accessed), the apparatus, such as the processor 22, may be configured to permit access to the first and second images without application of any access restrictions. However, in an instance in which the person attempting to access the image is determined to be a co-worker (e.g., a group of users with a degree of closeness less than that of a friend or family user) or is otherwise not recognized, the apparatus, such as the processor, may be configured to restrict access to the first and second images in accordance with the associated security level.

As described herein, a security level is associated with at least one of the first and second concurrently captured images and the associated security level may be stored along with the respective image, such as within metadata associated with the respective image, by being embedded within the respective image or otherwise associated with the respective image. However, the security level associated with the image(s) may additionally or alternatively be stored in or otherwise associated with the applications that are executed to access and display the image(s), such as by storing the security level with the application utilized to access the image(s) and/or the web application utilized to view the image(s). In instances in which the security levels associated with the image differ or conflict with other security levels, such as the security level associated with the applications that are executed to access and display the image(s), the apparatus 20, such as the processor 22, may be configured to prioritize the respective security levels, such as by restricting access to the image(s) based upon the security level stored along with the respective image(s) even if such access is in conflict with the access permitted pursuant to the other security levels. In some implementations, the security levels may be prioritized to control or restrict access to the image(s) based upon the security level stored in or otherwise associated with the applications (e.g., an application used by the owner or controller of the images, such as at a home device of the owner or controller).

The security level to be associated with at least one of the first and second images may be predefined or may otherwise be established by a configuration of the mobile terminal 10 or the apparatus 20 associated therewith. However, the apparatus, such as the processor 22, may be configured to permit the user to set the security level associated with each of the first and second images, such as by allowing a user to separately set the security level associated with each of the first and second images. In this regard, the user may set the security level in any of various manners, such as by selecting the security level from a dropdown list, by selecting the security level with the placement of a slider as positioned along a bar defining each of the potential security levels or the like.

With respect to the partial obfuscation of an image, such as the obfuscation of a face and/or body of a person within an image, the apparatus 20, such as the processor 22, may be configured to recognize the face of a person within an image and/or the body of a person within an image and to correspondingly mask or obfuscate the face and/or body within the image that is presented. For example, the apparatus, such as the processor, may be configured to automatically recognize the face and/or body of a person within an image. In an example embodiment, the apparatus, such as the processor, may reference images of friends, family or other contacts of the user of the mobile terminal 10, such as may be stored in a contacts database, and may utilize the images of the friends, family and other contacts of the user of the mobile terminal to facilitate the automatic recognition of the face and/or body of people within the images captured by the mobile terminal to ensure proper obfuscation thereof in response to the association of an appropriate security level therewith. In another example embodiment, the apparatus, such as the processor, may be taught or otherwise trained, such as by the user, to recognize the face and/or body of a person within an image. In this regard, a plurality of images may be presented by the mobile terminal and reviewed by the user. Within each image, the user may identify the face and/or body of a person, such as by circling the face and/or body of the person upon a touch screen display.

As shown in the example embodiment of Figure 4, the partial obfuscation provided by one or more of the intermediate security levels may include the obfuscation of the face, or both the face and body, of a person within an image. The extent of the obfuscation may be predefined and associated with a respective security level, such as described above with respect to the embodiment of Figure 4. However, the extent of the partial obfuscation may alternatively be based upon input provided by the user. In this regard, the user, either at the time of capture of the first and second images or thereafter, such as upon storage of the first and second images or upon receipt of an indication that the first and second images are intended to be viewed or shared, may be prompted to indicate the degree of obfuscation of a person within an image. In this example embodiment, the image that is to be partially obfuscated as a result of the associated security level, may be presented to the user (e.g., using a free-hand interface to indicate the obfuscated portions), such as upon the user interface 26. The user may then indicate the portion(s) of the image to be obfuscated, such as by circling the respective portion(s) of the image to be obfuscated or otherwise rubbing their finger, stylus or the like over the respective portion(s) of the image to be obfuscated. The apparatus 20, such as the processor 22, may then mask or obfuscate the respective portion(s) of the image in the manner indicated by the user. Additionally, the apparatus, such as the processor, may learn from the input provided by the user and may mask other images that include the same person in the same manner as indicated by the user input.

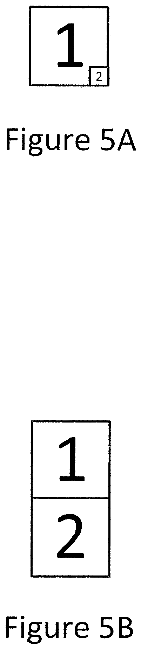

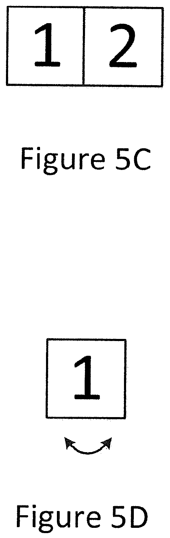

Thereafter, in an instance in which the first and second images that were concurrently captured by the mobile terminal 10 are viewed and/or shared, such as for viewing by another, the images may be presented in a manner defined by the security level with access correspondingly restricted thereto, such as shown by Figure 4, in the absence of the entry of appropriate security credentials. The first and second images that were concurrently captured may be provided, presented, or displayed in various manners. As shown in Figure 5A, for example, the first and second images may be concurrently displayed, dependent on the security levels of the images, with one of the images being reduced in size and inset with respect to the other of the images, such as with the second image being reduced in size and inset relative to the first image. Alternatively, the first and second images may be concurrently displayed and arranged vertically or horizontally as shown in Figures 5B and 5C, respectively. Still further, the first and second images may be sequentially displayed with one of the images, such as the first image as shown in Figure 5D, being displayed, and then, upon receipt of user input, being flipped, such as about a vertical axis as shown in Figure 5D or about a horizontal axis (not shown), to depict the second image.

In some implementations, an image may be provided (e.g., by a server) or presented (e.g., by a client) regardless of its associated security level (e.g., provided or presented even when the associated security level is total obfuscation, such as level 4 in the Figure 4 example). In other implementations, when the resulting security level (e.g., after resulting security priority) is total obfuscation, the associated image is not provided or presented.

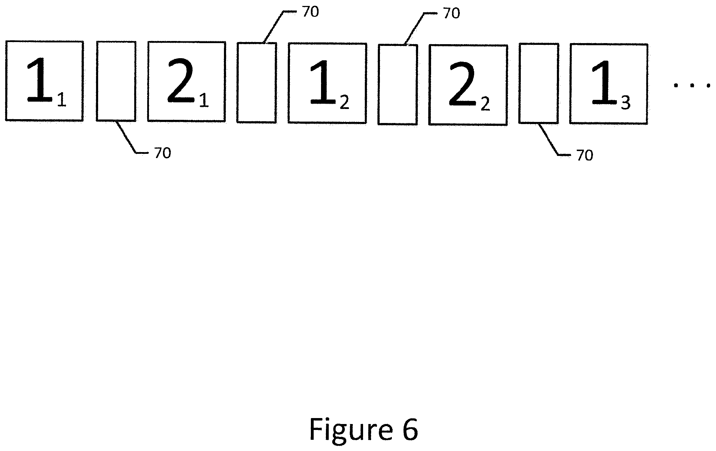

The first and second images may additionally or alternatively be shown as a sequence of images, such as in a horizontal orientation as depicted in Figure 6, in a vertical orientation, or any other orientation. In this regard, the first and second images that were concurrently captured at a first instance of time may be presented by the apparatus 20, such as the processor 22, the user interface 26 or the like, as indicated by Images 11 and 21, followed by the first and second images captured at a second instance in time as designated by Images 12 and 22, followed by the first and second images captured at a third instance in time designated 13 and 23, and so on. In this example embodiment, an interpolation region 70 may be presented between the neighboring images, such as between Images 11 and 21, between Images 21 and 12 and so on, or between neighboring image pairs (not shown), such as after Images 11 and 21, after Images 12 and 22, and so on. The interpolation region may include any of various visual and/or audio effects. The visual and/or audio effects may include, for example, interlacing of the neighboring images, fading out from the preceding image and fading in to the following image, interpolation from the preceding image to the following image, or any other type of visual and/or audio break between the neighboring images.

As described above, a method, apparatus 20 and computer program product are therefore provided to facilitate the concurrent capture of first and second images by a mobile terminal 10. The method, apparatus and computer program product permit a security level to be associated with at least one of the first or second images so as to selectively restrict access thereto. Thus, a user can permit both the first and second images to be concurrently captured and then viewed or shared with others without concern that the images will embarrass or otherwise place the user in an unflattering light since the security level associated with at least one of the first and second images will restrict access in a manner that is acceptable to the user. The first and second images may therefore be captured more quickly without the user having to modify the settings of the mobile terminal. In addition, the first and second images may be shared without the user having to review each individual image in advance to determine the acceptability of the image.

## Claims

1. A computer-implemented method comprising:
receiving an indication that a front image (50, 52, 54, 56, 58) and a rear image (60, 62, 64, 66, 68) have been captured concurrently (40) by respective front and rear image capturing devices (30, 32) of a mobile terminal (10), wherein a security level to be associated with the front and rear image (60, 62, 64, 66, 68) is predefined and selected from a plurality of values; and
automatically associating the predefined security level with the captured images to control access to the image content in combination with security credentials; and
in the absence of an entry of the security credentials, restricting access to the respective front and rear images by obfuscating the images when viewed by a user according to the associated security level;
wherein the plurality of values include values indicating increasing amounts of partial obfuscation to be applied to the rear image including obfuscation of a face or body of a person identified by a facial or body recognition method within the rear image without correspondingly obfuscating the front image.

2. A method according to Claim 1 wherein the method further comprises providing for storage of the first and second images with the security level associated with the front and rear images (44).

3. A computer program product comprising at least one non-transitory computer readable medium having program code portions stored thereon, wherein the program code portions are configured, upon execution, to perform the method of Claim 1 or Claim 2.

4. A mobile terminal (10) including a front image capturing device (30) and a rear imaging capture device (32) and an apparatus (20) comprising:
at least one processor (22); and
at least one memory (24) including computer program code,
the at least one memory and the computer program code configured to, with the at least one processor, cause the apparatus to:
receive an indication that a front image (50, 52, 54, 56, 58) and a rear image (60, 62, 64, 66, 68) have been captured concurrently (40) by the respective front and rear image capturing devices (30, 32) of the mobile terminal (10), wherein a security level to be associated with the front and rear image (60, 62, 64, 66, 68) is predefined and selected from a plurality of values; and
automatically associating the predefined security level with the captured images to control access to the image content in combination with security credentials; and
in the absence of an entry of the security credentials, restricting access to the respective front and rear images by obfuscating the images when viewed by a user according to the associated security level;
wherein the plurality of values include values indicating increasing amounts of partial obfuscation to be applied to the rear image including obfuscation of a face or body of a person identified by a facial or body recognition method within the rear image without correspondingly obfuscating the front image.

5. A mobile terminal (10) according to Claim 4 wherein at least one of the front (50, 52, 54, 56, 58) and rear images (60, 62, 64, 66, 68) is comprised by a video having a plurality of temporally sequential frames.

6. A mobile terminal (10) according to Claim 4 or Claim 5 wherein the at least one memory and the computer program code is further configured to, with the at least one processor, cause the apparatus to provide for storage of the front and rear images with the security level associated with the at least one of the front and rear images.

## Patentansprüche

1. Computerimplementiertes Verfahren, das Folgendes umfasst:
Empfangen einer Anzeige, dass ein vorderes Bild (50, 52, 54, 56, 58) und ein hinteres Bild (60, 62, 64, 66, 68) von einer jeweiligen vorderen und hinteren Bilderfassungsvorrichtung (30, 32) eines mobilen Endgeräts (10) gleichzeitig erfasst wurden (40), wobei eine Sicherheitsstufe, die mit dem vorderen und dem hinteren Bild (60, 62, 64, 66, 68) zu verknüpfen ist, vordefiniert und aus einer Vielzahl von Werten ausgewählt ist; und
automatisches Verknüpfen der vordefinierten Sicherheitsstufe mit den erfassten Bildern, um den Zugang zum Bildinhalt in Verbindung mit Sicherheitszugangsberechtigungen zu steuern; und
bei Fehlen eines Eintrags der Sicherheitszugangsberechtigungen, Einschränken des Zugangs zum jeweiligen vorderen und hinteren Bild durch Unkenntlichmachen der Bilder gemäß der verknüpften Sicherheitsstufe, wenn sie von einem Benutzer angesehen werden;
wobei die Vielzahl von Werten Werte beinhalten, die ansteigende Beträge einer teilweisen Unkenntlichmachung anzeigen, die auf das hintere Bild anzuwenden ist, was die Unkenntlichmachung eines Gesichts oder eines Körpers einer Person, das bzw. der durch ein Gesichts- oder Körpererkennungsverfahren identifiziert wurde, im hinteren Bild beinhaltet, ohne das vordere Bild unkenntlich zu machen.

2. Verfahren nach Anspruch 1, wobei das Verfahren ferner das Bereitstellen zum Speichern des ersten und des zweiten Bildes mit der Sicherheitsstufe, die mit dem vorderen und dem hinteren Bild (44) verknüpft ist, umfasst.

3. Computerprogrammprodukt, das mindestens ein nichttransitorisches computerlesbares Medium aufweist, auf dem Programmcodeabschnitte gespeichert sind, wobei die Programmcodeabschnitte dazu ausgelegt sind, nach der Ausführung das Verfahren nach Anspruch 1 oder Anspruch 2 durchzuführen.

4. Mobiles Endgerät (10), das eine vordere Bilderfassungsvorrichtung (30) und eine hintere Bilderfassungsvorrichtung (32) sowie eine Einrichtung (20) beinhaltet, die Folgendes umfasst:
mindestens einen Prozessor (22) und
mindestens einen Speicher (24), der einen Computerprogrammcode beinhaltet,
wobei der mindestens eine Speicher und der Computerprogrammcode dazu ausgelegt sind, mit dem mindestens einen Prozessor die Einrichtung zu Folgendem zu veranlassen:
Empfangen einer Anzeige, dass ein vorderes Bild (50, 52, 54, 56, 58) und ein hinteres Bild (60, 62, 64, 66, 68) von der jeweiligen vorderen und hinteren Bilderfassungsvorrichtung (30, 32) des mobilen Endgeräts (10) gleichzeitig erfasst wurden (40), wobei eine Sicherheitsstufe, die mit dem vorderen und dem hinteren Bild (60, 62, 64, 66, 68) zu verknüpfen ist, vordefiniert und aus einer Vielzahl von Werten ausgewählt ist; und
automatisches Verknüpfen der vordefinierten Sicherheitsstufe mit den erfassten Bildern, um den Zugang zum Bildinhalt in Verbindung mit Sicherheitszugangsberechtigungen zu steuern; und
bei Fehlen eines Eintrags der Sicherheitszugangsberechtigungen, Einschränken des Zugangs zum jeweiligen vorderen und hinteren Bild durch Unkenntlichmachen der Bilder gemäß der verknüpften Sicherheitsstufe, wenn sie von einem Benutzer angesehen werden;
wobei die Vielzahl von Werten Werte beinhalten, die ansteigende Beträge einer teilweisen Unkenntlichmachung anzeigen, die auf das hintere Bild anzuwenden ist, was die Unkenntlichmachung eines Gesichts oder eines Körpers einer Person, das bzw. der durch ein Gesichts- oder Körpererkennungsverfahren identifiziert wurde, im hinteren Bild beinhaltet, ohne das vordere Bild unkenntlich zu machen.

5. Mobiles Endgerät (10) nach Anspruch 4, wobei mindestens eines des vorderen (50, 52, 54, 56, 58) und des hinteren Bildes (60, 62, 64, 66, 68) in einem Video mit einer Vielzahl von zeitlich aufeinanderfolgenden Rahmen umfasst ist.

6. Mobiles Endgerät (10) nach Anspruch 4 oder Anspruch 5, wobei der mindestens eine Speicher und der Computerprogrammcode ferner dazu ausgelegt sind, mit dem mindestens einen Prozessor die Einrichtung zu veranlassen, das Speichern des vorderen und des hinteren Bildes mit der Sicherheitsstufe, die mit dem mindestens einen des vorderen und des hinteren Bildes verknüpft ist, bereitzustellen.

## Revendications

1. Procédé mis en oeuvre par ordinateur comprenant :
la réception d'une indication qu'une image frontale (50, 52, 54, 56, 58) et qu'une image arrière (60, 62, 64, 66, 68) ont été capturées simultanément (40) par des dispositifs de capture d'images frontale et arrière respectifs (30, 32) d'un terminal mobile (10), un niveau de sécurité à associer à l'image frontale et arrière (60, 62, 64, 66, 68) étant prédéfini et sélectionné parmi une pluralité de valeurs ; et
l'association automatique du niveau de sécurité prédéfini aux images capturées afin de contrôler l'accès au contenu des images en combinaison avec des justificatifs de sécurité ; et
en l'absence d'une entrée des justificatifs de sécurité, la restriction de l'accès aux images frontale et arrière respectives en masquant les images lorsqu'elles sont visualisées par un utilisateur conformément au niveau de sécurité associé ;
la pluralité de valeurs comprenant des valeurs indiquant des quantités croissantes de masquage partiel à appliquer sur l'image arrière comprenant le masquage d'un visage ou d'un corps d'une personne identifiée par un procédé de reconnaissance faciale ou corporelle à l'intérieur de l'image arrière sans masquer l'image frontale de manière correspondante.

2. Procédé selon la revendication 1, ce procédé comprenant en outre la fourniture pour le stockage de la première et de la deuxième image avec le niveau de sécurité associé aux images avant et arrière (44).

3. Produit programme informatique comprenant au moins un support non transitoire lisible par ordinateur ayant des parties de code de programme stockées sur lui, ces parties de code de programme étant configurées de façon à, lors de l'exécution, exécuter le procédé selon la revendication 1 ou la revendication 2.

4. Terminal mobile (10) comprenant un dispositif de capture d'image frontale (30) et un dispositif de capture d'image arrière (32) et un appareil (20) comportant :
au moins un processeur (22) ; et
au moins une mémoire (24) comprenant un code de programme informatique,
cette au moins une mémoire et le code de programme informatique étant configurés de façon à, avec l'au moins un processeur, faire en sorte que l'appareil :
reçoive une indication qu'une image frontale (50, 52, 54, 56, 58) et qu'une image arrière (60, 62, 64, 66, 68) ont été capturées simultanément (40) par les dispositifs de capture d'image frontale et arrière respectifs (30, 32) du terminal mobile (10), un niveau de sécurité à associer à l'image frontale et arrière (60, 62, 64, 66, 68) étant prédéfini et sélectionné parmi une pluralité de valeurs ; et
associe automatiquement le niveau de sécurité prédéfini aux images capturées afin de contrôler l'accès au contenu des images en combinaison avec des justificatifs de sécurité ; et
en l'absence d'une entrée des justificatifs de sécurité, la restriction de l'accès aux images frontale et arrière respectives en masquant les images lorsqu'elles sont visualisées par un utilisateur conformément au niveau de sécurité associé ;
la pluralité de valeurs comprenant des valeurs indiquant des quantités croissantes de masquage partiel à appliquer sur l'image arrière comprenant le masquage d'un visage ou d'un corps d'une personne identifiée par un procédé de reconnaissance faciale ou corporelle à l'intérieur de l'image arrière sans masquer l'image frontale de manière correspondante.

5. Terminal mobile (10) selon la revendication 4, dans lequel au moins une des images frontale (50, 52, 54, 56, 58) et arrière (60, 62, 64, 66, 68) est comprise par une vidéo ayant une pluralité de trames temporellement séquentielles.

6. Terminal mobile (10) selon la revendication 4 ou la revendication 5, dans lequel l'au moins une mémoire et le code de programme informatique sont configurés en outre de façon à, avec l'au moins un processeur, faire en sorte que l'appareil fournisse le stockage des images frontale et arrière avec le niveau de sécurité associé associé à l'au moins une des images frontale et arrière.
